# EUROPEAN PATENT SPECIFICATION

(11) **EP 4 382 366 B1**
(45) Date of publication and mention of the grant of the patent: **12.11.2025**
(21) Application number: 22306822.2
(22) Date of filing: 08.12.2022
(51) Int. Cl.: B60R 16/027

(54) **CLOCK SPRING ASSEMBLY**
UHRFEDERANORDNUNG
ENSEMBLE RESSORT D'HORLOGE

(43) Date of publication of application: 12.06.2024
(73) Proprietor: Nexans, 92400 Courbevoie (FR)
(72) Inventor: KRAPF, Stefan, 92696 Flossenbürg (DE)
(74) Representative: Ipsilon

(56) References cited:
- EP-A2- 1 247 697
- JP-A- H08 227 781
- US-A1- 2009 301 803
- US-A1- 2011 131 821

## Description

### Field

The present disclosure relates to a clock spring assembly and in particular to a clock spring assembly that prevents faulty electric signals if the clock spring is incorrectly mounted.

### Background

For many years already automobiles are equipped with airbag crash systems. Typically, one airbag is arranged in the rotating steering wheel of the automobile. In most cases the steering wheel is equipped with additional electrical input devices such as switches and buttons allowing the driver to control for example an audio and telephone system or cruise control settings of the automobile without taking off the hands from the steering wheel. Obviously, rotatable electrical connections between the rotatable steering wheel and the stationary cabling of the automobile are necessary for proper operation of the electronic components and the airbag. Electrical brushes resting on conductive rings are no option for automobiles because the reliability of the electrical contacts is insufficient especially when an accident occurs. Therefore, in today's automobiles clock spring interconnectors (briefly clock springs) have been developed to provide for rotatable electric connections between the steering wheel and the stationary cabling of the automobile. The clock spring comprises a stationary housing and a rotatable rotor including a cover. These components cooperatively define a chamber accommodating one or several flat ribbon cables. The ribbon cables are connected at one end with the rotor and on the other end with the stationary cabling of the automobile. The ribbon cables are wound on the rotor and unwind or wind up as the rotor rotates jointly with the steering wheel. The ribbon cables are long enough to permit the steering wheel to turn from the left stop to the right stop. For instance, in trucks the steering wheel can turn +/- 3,25 turn and in cars e.g. +/- 1,5 to 2 turns. These parameters are only examples and other implementations are possible. In any case the ribbon cables are long enough to enable the steering wheel turning from its left stop to its right stop to achieve the maximum possible steering angle.

A properly centered clock spring, i.e. the clock spring permits the same number of turns to the left and to the right when installed in a steering wheel in its neutral position, works without problem over extended periods of time. However, if the clock spring and/or the airbag has to be replaced for instance after an accident, then it may happen, that the replacement clock spring is mounted not in a centered position. If due to that the ribbon cable is disrupted then normally and a failure signal is indicated to the driver. The failure signal, e.g. a warning lamp turns on, makes the driver aware of the problem. However, it may also happen that the unwinding of the ribbon cable is only hampered without triggering the failure signal, and faulty electrical signals are generated that may trigger the inflation of an airbag and cause an accident in the worst case.

EP 1 247 697 A2 discloses a clock spring assembly comprising a stationary housing and a rotor, wherein the stationary housing and the rotor cooperatively define a chamber that accommodates at least one flexible ribbon cable that is wound in a first rotational direction onto the rotor and fixed at one end to the rotor and at the other end to the stationary housing, wherein the flexible ribbon cable establishes an electrical connection between the rotor and the stationary housing.

In view of the limitations of existing clock springs there remains a desire for an improved clock spring to overcome or at least improve one or more of the problems mentioned at the outset.

### Summary

According to a first aspect the present disclosure suggests a clock spring assembly comprising a stationary housing and a rotor. The stationary housing and the rotor cooperatively define a chamber that accommodates at least one flexible ribbon cable that is wound in a first rotational direction onto the rotor and fixed at one end to the rotor and at the other end to the stationary housing. The flexible ribbon cable establishes an electrical connection between the rotor and the stationary housing. A rupture pin is attached to the at least one ribbon cable. A slot is provided in the housing and captures the rupture pin if the rotor is overwound in a second rotational direction opposite to the first rotational direction such that the rupture pin blocks the ribbon cable from unwinding any further. Specifically, the first rotational direction is in counterclockwise direction and the second rotational direction is in clockwise direction or vice versa.

The clock spring assembly prevents that conductor paths on the ribbon cable in the clock spring assembly are damaged and may therefore cause faulty electrical signals which, in the worst case, may trigger the inflation of an airbag

In one embodiment the clock spring assembly comprises electrical connectors attached to the rotor and to the stationary housing, respectively. The electrical connectors are connected by the at least one ribbon cable. The ribbon cable establishes a reliable and durable electrical connection between the electrical connectors.

Advantageously, the ribbon cable is torn off when the rotor is turned further in the second rotational direction after the ribbon cable has been blocked by the rupture pin. The loss of an electrical connection is detectable and can be used to trigger a warning signal to the driver.

In one embodiment the at least one ribbon cable is torn off from an electrical connector.

In an advantageous embodiment the slot is curved. The curved slot provides an improved capturing of the rupture pin in the slot.

In a preferred embodiment the clock spring assembly comprises a side wall in the chamber which blocks the ribbon cable when the rotor is overturned into the first rotational direction.

It has been found useful when the rupture pin extends beyond of one or both longitudinal edges of the at least one ribbon cable. The rupture pin forming one or two protrusions readily engages with the slot in the housing.

If the rupture pin forms two protrusions it is advantageous when the clock spring comprises a cover provided with a slot which captures the rupture pin if the rotor is overwound in the second rotational direction.

The rupture pin may be realized as a spring pin with two protrusions extending beyond both longitudinal edges of the at least one ribbon cable. A spring pin can facilitate the engagement of the two protrusions in the slots.

In a preferred embodiment the rupture pin is covered with at least one layer of the ribbon cable when passing the slot if the clock spring assembly is installed in its centered position. This arrangement assures that properly centered clock spring functions properly and the rupture pin does not engage with the slot in the housing during operation of the clock spring.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a steering wheel with electric buttons;
- Fig. 2: a clock spring without cover in a perspective view;
- Figs. 3A, 3B: a clock spring out of its centered position towards the left-hand side;
- Fig. 3C: a clock spring with ribbon cables, which are wound in clockwise direction on the rotor;
- Figs. 4A-4C: a clock spring out of its centered position towards the right-hand side;
- Figs. 5A, 5B: a ribbon cable with a rupture pin;
- Figs. 6A-6C: a clock spring according to the present disclosure out of its centered position towards the right-hand side;
- Figs. 7A, 7B: a clock spring according to the present disclosure when it is installed in its centered position; and
- Fig. 7C: a cover of the clock spring according to the present disclosure.

In the figures the same or similar components are labelled with the same or similar reference signs.

### Detailed description

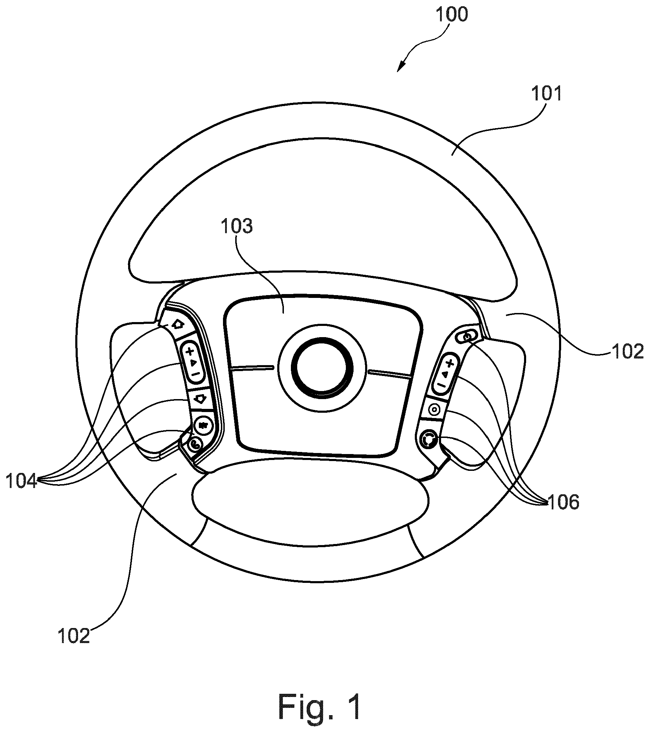

Figure 1 shows an automobile steering wheel 100 with a steering wheel rim 101, steering wheel spokes 102, and an impact cup 103 in the center of the steering wheel 100. The impact cup 103 accommodates a driver airbag with its associated airbag igniter (not shown). When sensors located in the automobile detect an accident, electric signals are sent to the airbag igniter to trigger it to inflate the airbag.

On the left and right side of the impact cup 103 a plurality of electric buttons 104, 106 are arranged. For instance, the electric buttons 104 on the left-hand side in Figure 1 are used to control an audio and telephone system of the automobile. In the same embodiment the electric buttons 106 on the right-hand side are used to control a cruise control system of the automobile. The electric buttons 104, 106 and the airbag igniter turn together with the steering wheel 100. Nevertheless, they need to be reliably connected with a stationary cabling system that provides connection with the electronic system of the automobile. This rotatable electric connection is achieved with a clock spring.

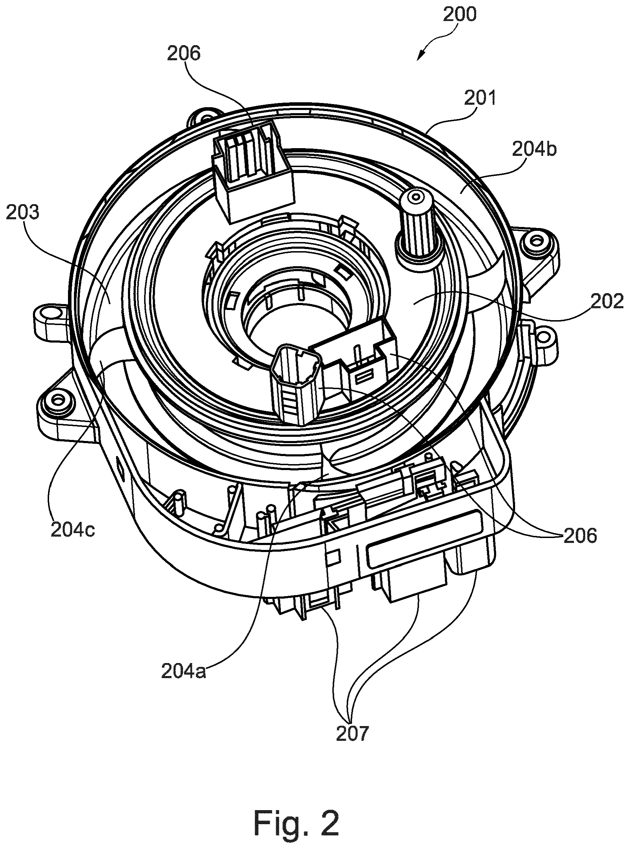

Figure 2 shows a clock spring assembly (briefly clock spring 200) in a perspective view. The clock spring 200 comprises a stationary housing 201 which, when the clock spring 200 is installed in an automobile, is fixed for example to a steering column of the automobile. Thus, the housing 201 remains stationary. When installed in the automobile, the clock spring 200 is closed by a cover which is not shown in Figure 2 to permit a view into the interior of the clock spring 200.

In the housing 201 a rotor 202 is pivoted and can rotate relative to the housing 201. The housing 201, the rotor 202, and the cover (not shown) of the clock spring 200 define cooperatively a chamber 203 that accommodates four ribbon cables but in Figure 2 only three ribbon cables 204a-c are visible. In other embodiments the clock spring 200 comprises fewer or more than four ribbon cables. The rotor 202 rotates together with the steering wheel 100. During rotation of the rotor 202, the ribbon cables 204a-c wind up to the rotor and unwind from the rotor, respectively, depending on the sense of rotation of the rotor. One end of each ribbon cable 204a-c is mechanically connected with the rotor 202 and electrically connected with sockets 206 located on the rotor 202. The other end of each ribbon cable 204a-c is mechanically connected with the housing 201 and electrically connected with sockets 207 located on the housing 201. The clock spring establishes a reliable and durable connection between the sockets 206 and 207 provided that the clock spring 200 is properly centered when installed. The clock spring is properly centered when its neutral position coincides with the neutral position of the steering wheel. Proper centering of the clock spring during manufacturing of the automobile is secured for instance by locking means preventing the clock spring rotor from turning out of its centered position. However, in a repair shop with less experienced staff it may the clock spring is not properly centered when it is reinstalled. The problems caused by a clock spring 200 which is not properly centered are explained in the following.

In other embodiments one or several of the sockets 206, 207 are replaced by plugs. Plugs and sockets are generally referred to as electrical connectors.

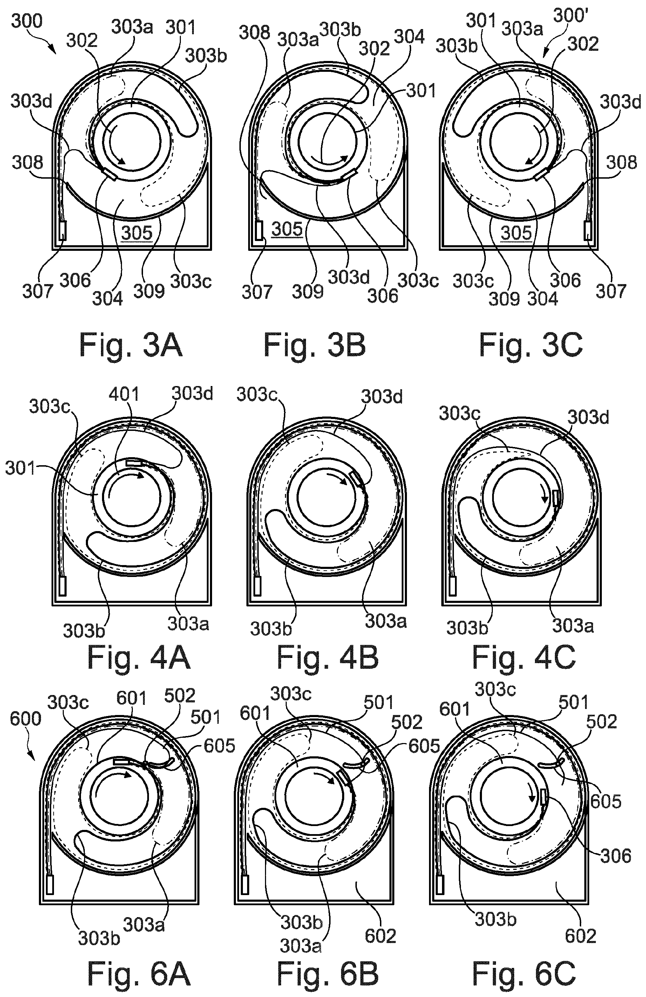

Figure 3A schematically illustrates a clock spring 300 with a rotor 301 out of the center position by a half or full rotation to the left as indicated by arrow 302. The clock spring 300 comprises four ribbon cables 303a-d located in a chamber 304 that is defined between the rotor 301 and a stationary housing 305. The ribbon cables 303a-d are connected on the one hand with a socket 306 located on the rotor 301 and with a socket 307 located on the housing 305. As can be seen in Figure 3A ribbon cable 303d is almost completely wound up on the rotor 301 in the counter-clock sense. However, since the steering wheel connected with the clock spring 300 has not yet arrived on its left stop, the ribbon cable 303d becomes at first tensioned over an edge 308 of an internal wall 309 of the housing 305 and is then disrupted as it is shown in Figure 3B. If that happens, the driver of the automobile is informed by a warning signal indicating a technical defect in the driver can take care of the problem by visiting a repair shop. Even though the described situation is undesirable, the problem can be easily managed. Much more problematic is a situation described in the following.

In other embodiments, the ribbon cables 303a-d are wound in clockwise direction on the rotor 301 as shown in Figure 3C for clock spring 300'. But in principle the functionality of the clock spring 300' is the same compared with clock spring 300. Therefore, without limitation of generality, reference is made in the following only to clock springs having ribbon cables that are wound counterclockwise on the rotor. To understand the functionality of the other type of clock springs, only the sense of rotation has to be exchanged.

Figures 4A shows a clock spring 300 with the rotor 301 out of the center position by the half or full rotation to the right as indicated by arrow 401. In Figure 4B the rotor 301 has turned further to the right-hand side by approximately 45°. In Figure 4C the rotor 301 has turned to the right-hand side by approximately 90° compared with the situation shown in Figure 4A. In the situation shown in Figure 4C the loops of the ribbon cables 303c, 303d have collapsed and conductor paths of the ribbon cables are overbent. The overbending may damage the conductor paths of the ribbon cables 303c, 303d and faulty electrical signals may occur due to that. The overbending of the ribbon cables 303c, 303d does not necessarily trigger a warning signal and, thus, the driver does not become aware of the problem. In the worst case, faulty electrical signals may trigger the airbag igniter at any time. This may even cause an accident.

In summary one can say that the installation of a clock spring in an uncentered position with a rotation to the left does not remain to be undetected because rather sooner than later one ribbon cable will tear off and a failure signal, for instance a warning light, will inform the driver about the defect. In contrast to that, if the coil spring is installed in an un-centered position with a rotation to the right, it may happen that one or several ribbon cables are damaged over time of operation of the coil spring, but the driver does not receive a warning signal regarding this defect. In order to improve this situation, the present disclosure proposes a modified clock spring in which the ribbon cable is also disrupted or torn off when the clock spring is installed in an uncentered position to the right-hand side.

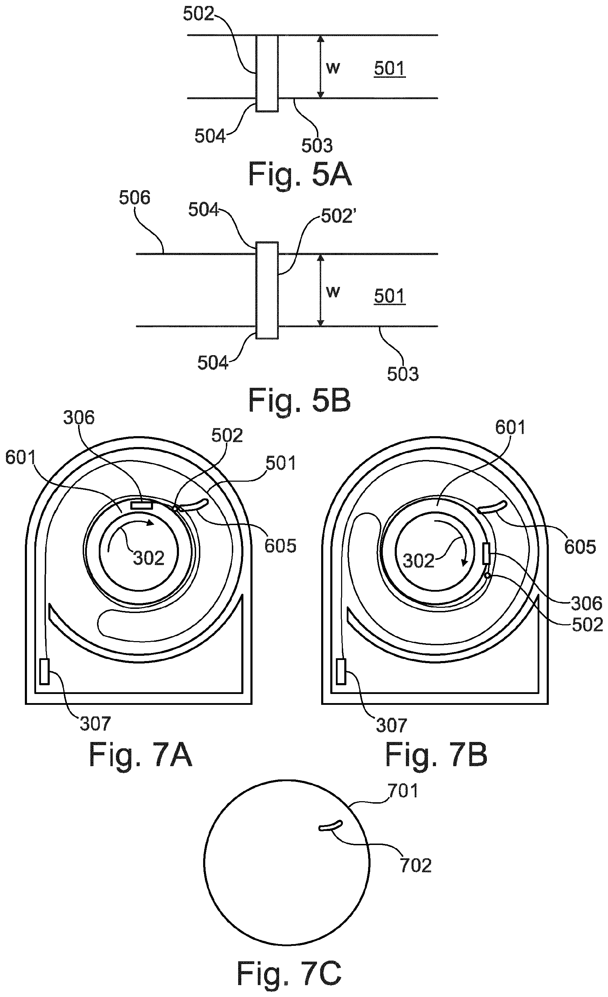

To this end, the present disclosure suggests equipping at least one ribbon cable 501 with a rupture pin 502 affixed to the ribbon cable 501 at a predefined position as it is shown in Figure 5A. The rupture pin 502 extends on one side of the ribbon cable beyond a longitudinal edge 503 of the ribbon cable 501 and forms a protrusion 504. The width w of the ribbon cable 501 is indicated with a double headed arrow. In Figure 5B an alternative embodiment of the rupture pin 502' is shown which extends beyond both longitudinal edges 503 and 506 of the ribbon cable 501 and forms two protrusions 504. The rupture pin 502' is realized as a spring pin that can be elastically compressed. In the following the function of the rupture pin is explained only in connection with the rupture pin 502 for the sake of simplicity. But in principle the functionality of the rupture pin 502' is the same.

The rupture pin 502 will disrupt or tear off the ribbon cable 501 if the clock spring has been installed in an un-centered position towards the right-hand side. The disruption of a single ribbon cable is sufficient to enable triggering a warning signal to the driver. Consequently, the driver can notice that a problem exists and can take care of it. Thus, the situation of a clock spring uncentered to the right-hand side becomes comparable with the situation of the clock spring uncentered to the left-hand side.

In the following an embodiment of the modified clock spring will be described. Figure 6A shows a correctly centered clock spring 600 having a rotor 601 that has reached its end position after turning to the right-hand side. The clock spring 600 further comprises a stationary housing 602 that is provided with a curved slot 605. The clock spring 600 comprises three conventional ribbon cables 303a-c and additionally the ribbon cable 501 with the rupture pin 502 as a fourth ribbon cable. In the end position shown in Figure 6A the rupture pin 502 is adjacent to the curved slot 605 but is not captured in the curved slot 605.

Figure 6B displays the clock spring 600 when it is installed in an uncentered fashion towards the right-hand side. In this situation, the rupture pin 502 is captured by the curved slot 605 when the rotor 601 reaches a certain rotational position after having turned to the right-hand side. If the rotor 601 continues to be turned to the right-hand side the rupture pin 502 engages in the curved slot 605 and blocks any further movement of the ribbon cable 501. As a result, the ribbon cable 501 is torn off from the socket 306 as shown in Figure 6C. The breaking of the electrical connection associated with the ribbon cable 501 is detected and a warning signal to the driver of the automobile is triggered.

Figures 7A and 7B displays simplified illustration of the clock spring 600 in which only the ribbon cable 501 is shown as single ribbon cable. When the rotor 601of the clock spring 600 is initially turned to the right-hand side, the rupture pin 502 passes of the curved slot 605 without engaging with the slot 605 because the rupture pin 502 is still covered by one the layer of the ribbon cable 501 which prevents the rupture pin from engaging with the curved slot 605. Before the rupture pin 502 passes the curved slot 605 again in the same sense of rotation, the steering wheel 100 connected with the rotor 601 arrives at its right stop and the rupture pin 502 does not engage with the curved slot 605 if the clock spring 600 has been installed properly centered. However, if the clock spring 600 has been installed in an uncentered position towards the right-hand side, then the rupture pin 502 engages with the curved slot 605 and the ribbon cable 501 is torn off from the socket 306 as shown in Figure 6C.

In an embodiment utilizing a rupture pin 502' with two protrusions 504 extending beyond both longitudinal edges 503, 506 of the ribbon cable 501 the cover 701 of the clock spring 600 is provided with a slot 702 that corresponds to the slot 605 as shown in Figure 7C. The protrusions 504 enter simultaneously into the slots 605 and 702, respectively. The functionality of the rupture pin 502' in this embodiment is essentially the same as the rupture pin 502.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

| | | | |
|---|---|---|---|
| 100 | steering wheel | 600 | Clock spring |
| 101 | steering wheel rim | 601 | Rotor |
| 102 | steering wheel rims | 602 | Housing |
| 103 | impact cup | 605 | Slot |
| 104,106 | Electric | 701 | Cover |
| 200 | clock spring | 702 | Slot |
| 201 | housing | | |
| 202 | rotor | | |
| 203 | chamber | | |
| 204a-c | Ribbon cable | | |
| 206 | Socket | | |
| 207 | Socket | | |
| 300 | Clock spring | | |
| 301 | Rotor | | |
| 302 | Arrow | | |
| 303a-d | Ribbon cables | | |
| 304 | Chamber | | |
| 305 | Housing | | |
| 306 | Socket on the rotor | | |
| 307 | Socket on the housing | | |
| 401 | Arrow | | |
| 501 | Ribbon cable | | |
| 502 | Rupture pin | | |
| 503 | Edge of ribbon cable | | |
| 504 | Protrusion | | |
| 506 | Edge of ribbon cable | | |

## Claims

1. Clock spring assembly comprising a stationary housing (201) and a rotor (601), wherein the stationary housing (201) and the rotor (601) cooperatively define a chamber (203) that accommodates at least one flexible ribbon cable (501) that is wound in a first rotational direction onto the rotor (601) and fixed at one end to the rotor (601) and at the other end to the stationary housing (305), wherein the flexible ribbon cable (501) establishes an electrical connection between the rotor (601) and the stationary housing (305), **characterized in that** a rupture pin (502,502') is attached to the at least one ribbon cable (501), that a slot (605) is provided in the housing, and that the slot (605) captures the rupture pin (502,502') if the rotor is overwound in a second rotational direction opposite to the first rotational direction such that the rupture pin blocks the ribbon cable (501) from unwinding any further.

2. Clock spring assembly according to claim 1 with electrical connectors (306,307) attached to the rotor (601) and to the stationary housing (302), respectively, wherein the electrical connectors (306,307) are connected by the at least one ribbon cable (501).

3. Clock spring assembly according to claim 1 or 2, wherein the ribbon cable (501) is torn off when the rotor (601) is turned further in the second rotational direction after the ribbon cable has been blocked by the rupture pin (502,502').

4. Clock spring assembly according to claim 3, wherein the at least one ribbon cable (501) is torn off from the electrical connector (306).

5. Clock spring assembly according to one of the preceding claims, wherein the slot (605) is curved.

6. Clock spring assembly according to one of the preceding claims, wherein a side wall (309) in the chamber (203) blocks the ribbon cable 303d) when the rotor is overturned into the first rotational direction.

7. Clock spring assembly according to one of the preceding claims, wherein the rupture pin (502,502') extends beyond of one or both longitudinal edges (503,506) of the at least one ribbon cable (501).

8. Clock spring assembly according to claim 7, wherein the rupture pin (502') is realized as a spring pin extending beyond both longitudinal edges (503,506) of the at least one ribbon cable (501).

9. Clock spring assembly according to claim 7 or 8, wherein the clock spring assembly (600) comprises a cover (701) provided with a slot (702) which captures the rupture pin (502,502') if the rotor (601) is overwound in the second rotational direction.

10. Clock spring assembly according to one of the preceding claims, wherein the rupture pin (502,502') is covered with at least one layer of the ribbon cable (501) when the rupture pin passes the slot (605) if the clock spring assembly is installed in its centered position.

## Patentansprüche

1. Wickelfederbaugruppe, umfassend ein feststehendes Gehäuse (201) und einen Rotor (601), wobei das feststehende Gehäuse (201) und der Rotor (601) zusammenwirkend eine Kammer (203) definieren, die mindestens ein flexibles Bandkabel (501) aufnimmt, das in einer ersten Drehrichtung auf den Rotor (601) gewickelt und an einem Ende an dem Rotor (601) und an dem anderen Ende an dem feststehenden Gehäuse (305) befestigt ist, wobei das flexible Bandkabel (501) eine elektrische Verbindung zwischen dem Rotor (601) und dem feststehenden Gehäuse (305) herstellt, **dadurch gekennzeichnet, dass** ein Brechstift (502, 502') an dem mindestens einen Bandkabel (501) angebracht ist, dass ein Schlitz (605) in dem Gehäuse vorgesehen ist und dass der Schlitz (605) den Brechstift (502, 502') erfasst, wenn der Rotor in einer der ersten Drehrichtung entgegengesetzten zweiten Drehrichtung überdreht wird, so dass der Brechstift das Bandkabel (501) blockiert, so dass es sich nicht weiter abwickelt.

2. Wickelfederbaugruppe nach Anspruch 1 mit elektrischen Verbindern (306, 307), die an dem Rotor (601) bzw. an dem feststehenden Gehäuse (302) angebracht sind, wobei die elektrischen Verbinder (306, 307) durch das mindestens eine Bandkabel (501) verbunden sind.

3. Wickelfederbaugruppe nach Anspruch 1 oder 2, wobei das Bandkabel (501) abgerissen wird, wenn der Rotor (601) weiter in die zweite Drehrichtung gedreht wird, nachdem das Bandkabel durch den Brechstift (502, 502') blockiert worden ist.

4. Wickelfederbaugruppe nach Anspruch 3, wobei das mindestens eine Bandkabel (501) von dem elektrischen Verbinder (306) abgerissen wird.

5. Wickelfederbaugruppe nach einem der vorhergehenden Ansprüche, wobei der Schlitz (605) gekrümmt ist.

6. Wickelfederbaugruppe nach einem der vorhergehenden Ansprüche, wobei eine Seitenwand (309) in der Kammer (203) das Bandkabel (303d) blockiert, wenn der Rotor in die erste Drehrichtung überdreht wird.

7. Wickelfederbaugruppe nach einem der vorhergehenden Ansprüche, wobei sich der Brechstift (502, 502') über einen oder beide Längsränder (503, 506) des mindestens einen Bandkabels (501) hinaus erstreckt.

8. Wickelfederbaugruppe nach Anspruch 7, wobei der Brechstift (502') als ein Federstift realisiert ist, der sich über beide Längsränder (503, 506) des mindestens einen Bandkabels (501) hinaus erstreckt.

9. Wickelfederbaugruppe nach Anspruch 7 oder 8, wobei die Wickelfederbaugruppe (600) eine Abdeckung (701) umfasst, die mit einem Schlitz (702) versehen ist, der den Brechstift (502, 502') erfasst, wenn der Rotor (601) in der zweiten Drehrichtung überdreht wird.

10. Wickelfederbaugruppe nach einem der vorhergehenden Ansprüche, wobei der Brechstift (502, 502') mit mindestens einer Lage des Bandkabels (501) abgedeckt wird, wenn der Brechstift an dem Schlitz (605) vorbeigeht, wenn die Wickelfederbaugruppe in ihrer zentrierten Position installiert ist.

## Revendications

1. Ensemble contacteur annulaire comprenant un boîtier fixe (201) et un rotor (601), le boîtier fixe (201) et le rotor (601) définissant en coopération une chambre (203) recevant au moins un câble ruban flexible (501) qui est enroulé dans un premier sens de rotation sur le rotor (601) et fixé au niveau d'une extrémité au rotor (601) et au niveau de l'autre extrémité au boîtier fixe (305), le câble ruban flexible (501) établissant une liaison électrique entre le rotor (601) et le boîtier fixe (305), **caractérisé en ce qu'**une goupille de rupture (502, 502') est fixée à l'au moins un câble ruban (501), **en ce qu'**une fente (605) étant pratiquée dans le boîtier, et **en ce que** la fente (605) capte la goupille de rupture (502, 502') si le rotor est enroulé dans un second sens de rotation opposé au premier sens de rotation, de sorte que la goupille de rupture empêche le câble ruban (501) de se dérouler davantage.

2. Ensemble contacteur annulaire selon la revendication 1 pourvu de connecteurs électriques (306, 307) fixés respectivement au rotor (601) et au boîtier fixe (302), les connecteurs électriques (306, 307) étant connectés par l'au moins un câble ruban (501).

3. Ensemble contacteur annulaire selon la revendication 1 ou 2, le câble ruban (501) étant arraché lorsque le rotor (601) est tourné davantage dans le second sens de rotation après que le câble ruban a été bloqué par la goupille de rupture (502, 502').

4. Ensemble contacteur annulaire selon la revendication 3, l'au moins un câble ruban (501) étant arraché du connecteur électrique (306).

5. Ensemble contacteur annulaire selon l'une des revendications précédentes, la fente (605) étant incurvée.

6. Ensemble contacteur annulaire selon l'une des revendications précédentes, une paroi latérale (309) dans la chambre (203) bloquant le câble ruban (303d) lorsque le rotor est retourné dans le premier sens de rotation.

7. Ensemble contacteur annulaire selon l'une quelconque des revendications précédentes, la goupille de rupture (502, 502') s'étendant au-delà d'un ou des deux bords longitudinaux (503, 506) de l'au moins un câble ruban (501).

8. Ensemble contacteur annulaire selon la revendication 7, la goupille de rupture (502') étant réalisée sous la forme d'une goupille-ressort s'étendant au-delà des deux bords longitudinaux (503, 506) de l'au moins un câble ruban (501).

9. Ensemble contacteur annulaire selon la revendication 7 ou 8, l'ensemble contacteur annulaire (600) comprenant un couvercle (701) pourvu d'une fente (702) qui capture la goupille de rupture (502, 502') si le rotor (601) est enroulé dans le second sens de rotation.

10. Ensemble contacteur annulaire selon l'une des revendications précédentes, la goupille de rupture (502, 502') étant recouverte d'au moins une couche du câble ruban (501) lorsque la goupille de rupture passe dans la fente (605) si l'ensemble contacteur annulaire est installé dans sa position centrée.
